# EUROPÄISCHE PATENTSCHRIFT

(11) **EP 2 384 864 B1**
(45) Veröffentlichungstag und Bekanntmachung des Hinweises auf die Patenterteilung: **12.04.2017**
(21) Anmeldenummer: 11162232.0
(22) Anmeldetag: 13.04.2011
(51) Int. Cl.: B25J 15/00

(54) **Robotergreifer und Handhabungsroboter**
Robot gripper and handling robot
Poignée de robot et robot de manipulation

(30) Priorität: 28.04.2010 DE 102010018963
(43) Veröffentlichungstag der Anmeldung: 09.11.2011
(73) Patentinhaber: IPR-Intelligente Peripherien für Roboter GmbH, 74193 Schwaigern (DE)
(72) Erfinder: Ehrenleitner Franz, 72213 Altensteig-Walddorf (DE)
(74) Vertreter: Patentanwaltskanzlei Cartagena

(56) Entgegenhaltungen:
- EP-A1- 0 192 994
- DE-A1- 3 914 596
- DE-A1- 19 959 285
- JP-A- 62 004 132

## Beschreibung

### Anwendungsgebiet und Stand der Technik

Die Erfindung betrifft einen Robotergreifer zum Ergreifen, Transportieren und Ablegen von Transportgütern, insbesondere von Gepäckstücken wie Koffern und Reisetaschen. Ein solcher gattungsgemäßer Robotergreifer weist eine Greiferbasis mit einer daran vorgesehenen Kopplungseinrichtung zur Anbringung an einem Roboterarm auf. Weiterhin weist der gattungsgemäße Robotergreifer eine in einer Greiferlängsrichtung erstreckte Trageinrichtung mit einer Auflagefläche auf, die der Auflage des Transportgutes dient und die sich im Wesentlichen in Greiferlängsrichtung und in einer Greiferquerrichtung erstreckt. Umfasst ist weiterhin eine Verlagerungseinrichtung, die in einer Greiferhochrichtung oberhalb der Trageinrichtung angeordnet ist und die der Kraftbeaufschlagung des Transportgutes in Greiferlängsrichtung dient. Die Trageinrichtung und die Verlagerungseinrichtung sind dabei in Greiferlängsrichtung relativ zueinander verlagerbar.

Die Erfindung betrifft weiterhin einen Roboter mit einem solchen Robotergreifer sowie Verfahren zum Ergreifen und Ablegen eines Transportgutes mit einem solchen Robotergreifer bzw. von einem solchen Robotergreifer.

Ein gattungsgemäßer Robotergreifer ist aus der DE 10 2005 022 828 A1 bekannt. Bei diesem wird die Trageinrichtung durch teleskopartig ineinanderfahrbare Kastenabschnitte gebildet. Die Verlagerungseinrichtung wird durch einen Anschlag sowie einen Schieber gebildet, die seitlich an einem auf der Trageinrichtung angeordneten Transportgut angreifen können.

Die vergleichsweise komplexe Teleskop-Gestaltung mit teleskopartigen Kästen gemäß der DE 10 2005 022 828 A1 löst das Problem, dass auf der dem Transportgut abgewandten Seite des Robotergreifers der Raum aufgrund des dort angeordneten Roboterarms begrenzt ist, so dass umfangreiche Getriebeelemente dort keinen Platz finden. Die Gestaltung ist jedoch hinsichtlich der Art des Beladens recht eingeschränkt, da ein Aufschieben des Transportgutes über die von den Kastenabschnitten gebildeten Stufen schwer möglich ist, so dass die in der DE 10 2005 022 828 A1 beschriebene Beladeart von einem Förderband kaum ersetzt werden kann. Ein Aufnehmen eines Transportgutes von einem ebenen Untergrund ist mit dem Greifer der DE 10 2005 022 828 A1 nicht oder zumindest nicht problemlos zu realisieren.

Das Dokument DE 199 59 285 A1 offenbart ebenfalls einen gattungsgemäßen Robotergreifer. Dieser Greifer erstreckt sich hauptsächlich in seiner Greifhochrichtung, was die Flexibilität seiner Nutzung beschränkt.

### Aufgabe und Lösung

Aufgabe der Erfindung ist es, einen gattungsgemäßen Robotergreifer derart weiterzubilden, dass dieser einfach und insbesondere mit geringer Masse gefertigt werden kann und in besonders flexibler und zuverlässiger Weise Transportgüter, insbesondere Gepäckstücke, aufnehmen und ablegen kann.

Erfindungsgemäß wird dies dadurch erreicht, dass die Trageinrichtung gegenüber der Greiferbasis in Greiferlängsrichtung verlagerbar ist, dass die Trageinrichtung an ihrem der Greiferbasis zugewandten proximalen Ende zwei voneinander in Greiferquerrichtung beabstandete Endabschnitte aufweist, die einen dazwischen liegenden Freiraum aussparen, und dass die Endabschnitte der Trageinrichtung in der der Greiferbasis zugewandten Endlage der Trageinrichtung jeweils in Greiferlängsrichtung hinter der Kopplungseinrichtung und in Greiferquerrichtung gegenüberliegend beidseitig auf Höhe der Kopplungseinrichtung angeordnet sind.

Bevorzugt kann die Verlagerungseinrichtung, die zumindest während des Transportvorganges eines Transportgutes rückseitig, also der Greiferbasis zugewandt angeordnet ist, über eine Halteeinrichtung verfügen, mittels derer sie im Haltekontakt mit einem Transportgut eine Haltekraft erzeugen kann. Diese Haltekraft wirkt somit einer Trennung des Transportgutes in die der Greiferbasis abgewandte Richtung entgegen.

Im Kontext dieses Dokumentes sind die folgenden Begrifflichkeiten wie nachfolgend erläutert zu verstehen. Die "Greiferhochrichtung" ist durch die Flächennormale auf der Auflagefläche der Trageinrichtung definiert. Die "Greiferlängsrichtung" erstreckt sich orthogonal zur Greiferhochrichtung in jener Richtung, in der die Trageinrichtung und die Verlagerungseinrichtung gegeneinander bewegbar sind. Die "Greiferquerrichtung" erstreckt sich orthogonal zur Greiferhochrichtung sowie orthogonal zur Greiferlängsrichtung. "Vorne" bezeichnet eine Richtung ausgehend von der Greiferbasis in Richtung der Greiferlängsrichtung zum distalen Ende der Trageinrichtung. "Hinten" bezeichnet die gegenläufige Richtung. "Oben" und "unten" beziehen sich auf eine Normalposition des Robotergreifers, in der die Trageinrichtung horizontal ausgerichtet ist, so dass ein Transportgut auf ihr transportiert werden kann.

Die bevorzugte Gestaltung mit einer Halteeinrichtung gestattet es, ein Transportgut auf der Trageinrichtung zusätzlich zu der bereits durch die Reibung zwischen dem Transportgut und der Trageinrichtung bestehenden Sicherung zu sichern. Der wesentliche Vorteil liegt jedoch darin, dass die Gestaltung der Verlagerungseinrichtung mit einer Halteeinrichtung es erlaubt, ein Transportgut besonders vorteilhaft und insbesondere bereits vor dessen Kontakt mit der Trageinrichtung zu manipulieren, um hierdurch einen idealen Beladungsvorgang zu realisieren. Ebenso kann beim Abladen des Transportgutes dieses noch manipuliert werden, wenn es bereits den Kontakt mit der Trageinrichtung verloren hat, und so beispielsweise sanft abgesetzt werden. Dies wird nachfolgend noch im Zusammenhang mit den Verfahren und den Ausführungsbeispielen erläutert.

Die Verlagerungseinrichtung und die Trageinrichtung begrenzen gemeinsamen den Aufnahmebereich für ein durch beide zu führendes Transportgut, wobei die Verlagerungseinrichtung den Aufnahmebereich in Greiferlängsrichtung nach hinten begrenzt und die Trageinrichtung den Aufnahmeraum unterseitig begrenzt. Vorzugsweise sind am erfindungsgemäßen Greifer keinerlei Teilabschnitte gegeben, die sich oberhalb der Verlagerungseinrichtung bis in diesen Aufnahmebereich erstrecken, so dass ein Transportgut nicht hinsichtlich seiner Höhe begrenzt ist.

Die Halteeinrichtung ist zur Erzeugung der erwähnten Haltekraft ausgebildet. Sie kann im einfachsten Falle passiv und somit nicht schaltbar ausgebildet sein, beispielsweise durch das Vorsehen von Klett-Flächen oder anderweitigen adhäsiv wirkenden Flächen an der Verlagerungseinrichtung. Von Vorteil ist es jedoch, wenn die Halteeinrichtung als schaltbare Halteeinrichtung ausgebildet ist. Hierbei sind unter anderem Gestaltungen denkbar, bei denen die Halteeinrichtung einen schaltbaren Elektromagneten zum Halten des Transportgutes mittels Magnetkraft oder eine an sich passiv wirkenden Haltefläche aufweist, welche jedoch gesteuert hinsichtlich ihrer Relativlage zur Trageinrichtung in Greiferhochrichtung oder Greiferquerrichtung verlagerbar ist, um gezielt eine Trennung der Halteeinrichtung vom Transportgut zu bewirken.

Als besonders vorteilhaft wird jedoch eine Saugeinrichtung angesehen, die zum Halten des Transportgutes mittels Unterdruck ausgebildet ist, da eine solche Saugeinrichtung nur in vergleichsweise geringem Maße hinsichtlich ihrer Funktionstüchtigkeit von der Gestaltung des Transportgutes abhängt.

Eine motorische Verlagerung der Halteeinrichtung ist bei den meisten Ausgestaltungen, insbesondere bei der Verwendung einer Saugeinrichtung, nicht erforderlich, so dass der für die Relativbewegung der Verlagerungseinrichtung gegenüber der Trageinrichtung erforderliche Motor der einzige Motor des Robotergreifers sein kann.

Um einen vorzugsweise flächigen Haltekontakt zwischen dem Transportgut und der Halteeinrichtung ungeachtet der konkreten Ausrichtung hinsichtlich der Ebene der Greiferhochrichtung und Greiferlängsrichtung zu ermöglichen, ist die Halteeinrichtung gegenüber der Greiferbasis oder gegenüber einem gegenüber der Trageinrichtung nicht schwenkbaren Hauptabschnitt der Verlagerungseinrichtung vorzugsweise um eine Halteeinrichtungsdrehachse schwenkbar gelagert, wobei die Halteeinrichtungsdrehachse vorzugsweise in einem unveränderlichen Abstand zur Auflagefläche der Trageinrichtung hinsichtlich der Greiferhochrichtung angeordnet ist.

Die Schwenkachse gestattet das flächige Anlegen der Halteeinrichtung an der üblicherweise gegenüber einem Untergrund vertikal ausgerichteten Seitenfläche des Transportgutes, auch wenn der Robotergreifer selbst in einer zum Abladen und Aufladen bevorzugten nach vorne abgesenkten Stellung ausgerichtet ist. Für die Schwenkbewegung der Halteeinrichtung gegenüber dem Hauptabschnitt bzw. gegenüber der Greiferbasis ist vorzugsweise kein gezielt steuerbarer Motor vorgesehen. Stattdessen kann die Halteeinrichtung alleine durch die Bewegung des Robotergreifers mittels eines Roboterarms in Kontakt mit dem Transportgut gelangen und dann durch eine fortgeführte Bewegung in Flächenkontakt gebracht werden.

Bei einer schaltbaren Halteeinrichtung wird es als bevorzugt angesehen, wenn diese separat schaltbare Haltesektionen aufweist, so dass auf das zu transportierende Transportgut spezifisch eingegangen werden kann.

Insbesondere zum Aufnehmen von Transportgut von einem Untergrund wird es als besonders vorteilhaft angesehen, wenn die Trageinrichtung und die Verlagerungseinrichtung derart gegeneinander relativ verlagerbar sind, dass die Halteeinrichtung in einer ersten Relativendlage in Greiferlängsrichtung vor einem der Greiferbasis abgewandten distalen Ende der Trageinrichtung anordenbar ist. Diese erste Relativendlage ist somit dadurch gekennzeichnet, dass das der Roboterbasis abgewandte distale Ende des Robotergreifers durch die Halteeinrichtung gebildet wird. Diese kann in dieser ersten Relativendlage somit die bezweckte Haltekraft zum Transportgut herstellen, um es mittels dieser Haltekraft zu gestatten, das Transportgut von einem Untergrund soweit anzuheben, das die Trageinrichtung anschließend in den so gebildeten Spalt einfahren kann.

Dabei sind bevorzugt die Verlagerungseinrichtung und die Trageinrichtung derart ausgebildet und gegeneinander bewegbar, dass in der ersten Relativlage folgende Situation erzielbar ist: Der Robotergreifer ist zu seinem distalen Ende hin gegenüber einem ebenen Untergrund, auf dem das Transportgut steht, nach unten geneigt, wobei die Greiferlängsrichtung mit der Ebene des Untergrundes einen Winkel von weniger als 45° einschließt, vorzugsweise einen Winkel von weniger als 30° oder sogar einen Winkel von weniger als 20°. Die Trageinrichtung liegt dabei mit ihrem distalen Ende am ebenen Untergrund an oder bindet sich knapp über dem Untergrund. Gleichzeitig liegt die Halteeinrichtung in einer Höhe über dem Untergrund an dem Transportgut an, die identisch mit jener Höhe ist, in der die Halteeinrichtung an dem Transportgut anliegt wenn dieses wiederum flächig auf der Auflagefläche der Trageinrichtung aufläge.

Durch die Anordnung der Halteeinrichtung über der Trageinrichtung ist definiert, wo die Halteeinrichtung an einem Transportgut anliegen sollte, damit dieses gleichzeitig von der Halteeinrichtung an einer Seitenfläche gehalten und mit seiner Unterseite flächig auf der Auflagefläche der Trageinrichtung aufliegen kann. Die oben beschriebenen durch diese Weiterbildung des erfindungsgemäßen Robotergreifers erzielbaren Situation zielt darauf ab, dass noch bevor eine erste Verlagerung des aufzunehmenden Transportgutes stattfindet, die Halteeinrichtung bereits in eben dieser Position am Transportgut anliegen kann und somit die Haltekraft entfalten kann. Dies führt dazu, dass nach Bewirken der Haltekraft alleine durch Verlagern des Robotergreifers in seiner Gesamtheit eine Anordnung erzielbar ist, in der die Trageinrichtung unter das mittels der Halteeinrichtung seitlich angehobene Transportgut einfahren kann. Je kleiner der oben genannte Winkel ist, desto flacher kann der Robotergreifer das Transportgut anfahren.

Bei dem erfindungsgemäßen Robotergreifer ist vorgesehen, dass die Trageinrichtung in Greiferlängsrichtung gegenüber der Greiferbasis verfahrbar ist, um die Relativbeweglichkeit zur Verlagerungseinrichtung herzustellen, welche ihrerseits dann ortsfest zur Greiferbasis vorgesehen ist.

Von besonderem Vorteil ist eine Gestaltung, bei der sowohl die Trageinrichtung als auch die Verlagerungseinrichtung in Greiferlängsrichtung gegenüber der Greiferbasis relativverlagerbar sind. Hierdurch ist erreichbar, dass eine Gesamtrelativbeweglichkeit der Trageinrichtung gegenüber der Verlagerungseinrichtung durch die nur jeweils halbe Relativverlagerbarkeit der Trageinrichtung bzw. der Verlagerungseinrichtung gegenüber der Greiferbasis erzielt werden kann. Es kann vorgesehen sein, dass bei einer solchen Gestaltung die Verlagerungseinrichtung und die Trageinrichtung zur Erzeugung gegenläufiger Bewegungen miteinander zwangsgekoppelt sind, so dass ein einziger Motor zur Steuerung der Trageinrichtung und der Verlagerungseinrichtung ausreicht. Von Vorteil ist jedoch eine Gestaltung, bei der die Verlagerungseinrichtung und die Trageinrichtung separat voneinander gegenüber der Greiferbasis verlagerbar sind, da dies zu einer erhöhten Flexibilität beim Aufladen bzw. Abladen von Transportgütern führt und insbesondere die begrenzte Reichweite von Roboterarmen in nachfolgend noch erläuterter Weise zu erhöhen vermag.

In einer zweiten Relativendlage, die der ersten Relativendlage entgegengesetzt angeordnet ist und in der somit die Verlagerungseinrichtung greiferbasisnah und/oder die Trageinrichtung greiferbasisfern angeordnet ist, weist ein für Transportgut nutzbarer Abschnitt der Trageinrichtung, der vor der Halteeinrichtung angeordnet ist, eine Länge in Greiferlängsrichtung von vorzugsweise mindestens 15 cm auf. Bevorzugt werden jedoch 35 cm, insbesondere mindestens 45 cm. Diese Maße sind geeignet, um übliche Gepäckstücke von Flugreisenden sicher transportieren zu können.

Bei den beiden Endabschnitten der Trageinrichtung kann es sich vorzugsweise um zwei Zinken einer gabelartig ausgebildeten Trageinrichtung handeln. Es kann sich jedoch auch um Getriebeabschnitte, beispielsweise Zahnstangen oder Gewindespindeln einer Verlagerungseinrichtung handeln, die der Bewegung der Trageinrichtung dient. Auch eine Kombination dessen ist möglich. Bei einer Gestaltung, bei der die Endabschnitte durch Zinken einer Trageinrichtung gebildet sind, sind diese Zinken vorzugsweise separat ausgebildet und nicht fest miteinander verbunden. Dies gestattet ein Kollisionsfreies bewegen der Zinken gegenüber der Greiferbasis. Vorzugsweise sind die Zinken jedoch mittels eines Getriebes synchronisiert, da üblicherweise eine separate Bewegung der Zinken nicht erforderlich ist. Die Zinken können bei einer besonderen Weiterbildung auch in Greiferquerrichtung gegeneinander manuell oder mittels eines Motors verlagerbar sein.

Dem gleichen Grundgedanken folgend betrifft die Erfindung ebenfalls ein gattungsgemäßen Robotergreifer, vorzugsweise nach vorstehend beschriebener Art, bei dem die Verlagerungseinrichtung gegenüber der Greiferbasis und/oder gegenüber der Trageinrichtung in Greiferlängsrichtung verlagerbar ist, bei dem die Verlagerungseinrichtung an ihrem proximalen Ende zwei voneinander in Greiferquerrichtung beabstandete Getriebeabschnitte aufweist, die einen dazwischen liegenden Freiraum aussparen, und bei dem die Getriebeabschnitte in der der Greiferbasis zugewandten Endlage der Verlagerungseinrichtung jeweils in Greiferlängsrichtung hinter der Kopplungseinrichtung und in Greiferquerrichtung einander gegenüberliegend beidseitig der Kopplungseinrichtung angeordnet sind.

Die Anordnung der Getriebeabschnitte der Verlagerungseinrichtung bzw. der Endabschnitte der Trageinrichtung in der beschriebenen Art beidseitig der Kopplungseinrichtung gestattet es, eine zuverlässige mechanische Realisierung zur Bewegung der Trageinrichtung bzw. Verlagerungseinrichtung zu erzielen, ohne dass die Greiferbasis und insbesondere die Kopplungseinrichtung sowie der sich der an der Kopplungseinrichtung anschließende Roboterarm im Wege sind. Durch die Verlagerung der Endabschnitte bzw. der Getriebeabschnitte seitlich an der Kopplungseinrichtung vorbei kann somit eine erhebliche und für die meisten Zwecke ausreichende Verlagerbarkeit der Verlagerungseinrichtung und der Trageinrichtung erzielt werden. Um besonders flache Robotergreifer in Hinblick auf die Greiferhochrichtung zu ermöglichen, wird es als bevorzugt angesehen, wenn die Endabschnitte der Trageinrichtung bzw. die Getriebeabschnitte der Verlagerungseinrichtung bzgl. der Greiferhochrichtung auf Höhe der Kopplungseinrichtung angeordnet sind.

Zur Verlagerung der Trageinrichtung und/oder der Verlagerungseinrichtung haben sich verschiedene Gestaltungen als besonders vorteilhaft herausgestellt.

So ist bei einer Weiterbildung der Erfindung vorgesehen, dass die Trageinrichtung gegenüber der Greiferbasis in Greiferlängsrichtung verlagerbar ist, wobei an gegenüberliegenden Enden der Trageinrichtung ein Antriebsriemen befestigt ist und wobei der Antriebsriemen in Form eines Ω um zwei ortsfest zur Greiferbasis vorgesehen Führungsabschnitte sowie um ein Antriebsgrad gelegt ist, welches um eine ortsfest zur Greiferbasis angeordnete Antriebsachse drehbar gelagert ist. Diese Omega-Umschlingung stellt einen mechanisch recht unaufwendigen Weg dar, um die Bewegung der Trageinrichtung gegenüber der Greiferbasis zu realisieren.

Bei einer anderen Weiterbildung der Erfindung ist vorgesehen, dass die Trageinrichtung einen Hauptabschnitt sowie ein am Hauptabschnitt geführtes und gegenüber dem Hauptabschnitt bewegliches Auflageelement, vorzugsweise in Form eines Transportbandes, aufweist, welches die Auflagefläche des Transportbandes bildet. Bei einer solchen Gestaltung ist die Trageinrichtung somit nicht als lediglich einheitlich bewegbares Element vorgesehen, sondern verfügt über den erwähnten Hauptabschnitt und das erwähnte Auflageelement, die zueinander beweglich angeordnet sind. Soweit nicht anders gekennzeichnet, beziehen sich alle lediglich die Trageinrichtung im Bezug nehmenden Ausführungen in diesem Dokument bei Gestaltungen mit getrennt beweglichem Hauptabschnitt und Auflageelement auf den Hauptabschnitt. Die Trennung des die Auflagefläche bildenden Auflageelements vom Hauptabschnitt der Trageinrichtung gestattet es, bei der Bewegung des Transportgutes auf der Trageinrichtung eine Relativbewegung zwischen der Auflagefläche und dam darauf aufliegenden Transportgut zu verhindern, so dass eine Beschädigung des Transportgutes ausgeschlossen werden kann. Vorzugsweise ist das Auflageelement als Transportband ausgebildet, welches am distalen Ende der Trageinrichtung um das distale Ende des Hauptabschnitts herumgeführt ist und welches vorzugsweise als geschlossenes Transportband ausgebildet ist.

Besonders bevorzugt ist es in diesem Zusammenhang bei einer ersten Variante, wenn das Auflageelement zumindest abschnittsweise fest zur Greiferbasis angeordnet ist und der Hauptabschnitt der Trageinrichtung gegenüber der Greiferbasis beweglich ausgebildet ist. In einem solchen Fall dient das Transportband als Mittler zur Erzeugung der Relativbewegung der Trageinrichtung gegenüber der Greiferbasis, indem durch einen Motor eine Relativbewegung zwischen der Trageinrichtung und dem Transportband bewirkt wird, die aufgrund der Festlegung des Transportbandes an der Greiferbasis die gewünschte Relativbewegung der Trageinrichtung gegenüber der Greiferbasis erzielt. Alternativ dazu ist es bei einer zweiten Variante möglich, dass das Auflageelement in seiner Gänze beweglich gegenüber der Greiferbasis ausgebildet ist, wobei vorzugsweise die Verlagerungseinrichtung fest mit einem Abschnitt des Auflageelements verbunden ist. Bei einer solchen Gestaltung reicht somit die Verlagerung des Auflageelements gegenüber der Greiferbasis, um dadurch auch die Verlagerungseinrichtung zu bewegen. Hierdurch ist auch gewährleistet, dass keine Relativbewegung zwischen der Verlagerungseinrichtung und jenem Abschnitt des Auflageelements stattfindet, auf dem das Transportgut ruht.

Als weitere Weiterbildung hat es sich als bevorzugt herausgestellt, dass zur Bewegung der Verlagerungseinrichtung und/oder der Trageinrichtung gegenüber der Greiferbasis ein Teleskopmechanismus mit einem Zwischenglied vorgesehen ist, wobei das Zwischenglied gegenüber der Greiferbasis in Greiferlängsrichtung bewegbar ist und wobei wirkgekoppelt hierzu die Verlagerungseinrichtung bzw. die Trageinrichtung gegenüber dem Zwischenglied in Greiferlängsrichtung bewegt wird. Der Teleskopmechanismus, der beispielsweise durch eine Teleskopspindel ausgebildet sein kann, gestattet bei vergleichsweise geringer Baugröße eine besonders weite Verlagerbarkeit der Verlagerungseinrichtung bzw. der Trageinrichtung.

Die Erfindung betrifft weiterhin einen Handhabungsroboter, insbesondere zum Ergreifen, Transportieren und Ablegen von Transportgütern wie Gepäckstücken, mit einer ortsfest angeordneten oder über ein Schienensystem verlagerbaren Roboterbasis und einem gegenüber der Roboterbasis beweglichen Roboterarm, an dessen Ende eine Kopplungseinrichtung zur Ankopplung eines Robotergreifers vorgesehen ist, wobei an der Kopplungseinrichtung des Roboterarms ein erfindungsgemäßer Robotergreifer oben beschriebenen Typs angekoppelt ist.
Weiterhin betrifft die Erfindung Verfahren zum Ablegen bzw. zum Ergreifen eines Transportgutes auf einen bzw. von einem im Wesentlichen ebenen Untergrund mit erfindungsgemäßen Robotergreifer oben beschriebenen Typs.
In Hinblick auf das Ergreifen des Transportgutes ist dabei vorgesehen, dass ausgehend von einem Ausgangszustand, in dem die Trageinrichtung und die Halteeinrichtung in einer Relativlage sind, in der die Trageinrichtung hinter der Halteeinrichtung angeordnet ist, die Halteeinrichtung an eine Seitenfläche des auf einem Untergrund liegenden Transportgutes herangefahren wird, während die Trageinrichtung in einer zu ihrem distalen Ende gegenüber dem Untergrund abfallenden Ausrichtung angeordnet ist. Nach dem Heranfahren wird die Halteeinrichtung in Haltekontakt mit der Seitenfläche gebracht und anschließend, insbesondere gemeinsam mit dem gesamten Robotergreifer, angehoben wird, so dass die im Kontakt mit der Halteeinrichtung befindliche Seitenfläche des Transportgutes bei gleichzeitigem Verkippen des Transportgutes angehoben wird. In diesem dadurch erzielten verkippten Zustand wird die Trageinrichtung relativ zur Halteeinrichtung nach vorne und somit unter das Transportgut verfahren und das Transportgut anschließend mittels der Trageinrichtung angehoben und dabei vom Untergrund getrennt.
Das Verfahren gestattet es somit, ein auf einem Untergrund liegendes Transportgut welches nicht spezifisch für das Einfahren einer Trageinrichtung ausgebildet ist, zu ergreifen, indem zunächst eine Seite des Transportgutes angehoben wird. Hierdurch wird ein Zustand hergestellt, in dem die Trageinrichtung unter das Transportgut gelangen kann. Während des Einfahrens der Trageinrichtung verbleibt die auf dem Untergrund liegende Seite des Transportgutes vorzugsweise ortsfest, so dass es hier nicht zu Schleifschäden kommt. Die Trageinrichtung wird somit bei ihrem Einfahren unter das Transportgut vorzugsweise auch relativ zum Untergrund bewegt.

Von besonderem Vorteil kann es dabei sein, wenn beim Verfahren der Trageinrichtung nach vorne und somit unter das Transportgut die Verfahrrichtung divergierend zu einer Unterseite des Transportgutes ausgerichtet ist, so dass in einer erstes Phase dieser Bewegung, in der die Trageinrichtung bereits unter dem Transportgut angeordnet ist, noch kein Berührkontakt zwischen der Trageinrichtung und dem Transportgut besteht. Erst wenn die Trageinrichtung bereits ein Stück weit unter das Transportgut eingefahren wurde, beispielsweise um 10 cm bis 20 cm, wird sie so verkippt, dass sie in flächigen Kontakt mit dem Transportgut gelangt. Auch hierdurch werden Schleifschäden an der Unterseite des Transportgutes vermieden.

In umgekehrter Reihenfolge erfolgt das erfindungsgemäße Ablegen eines Transportgutes von dem oben beschriebenen Robotergreifer. Dabei wird ausgehend von einem Ausgangszustand, in dem das Transportgut auf der Trageinrichtung aufliegt und in Haltekontakt mit der Trageinrichtung steht, die Trageinrichtung in eine gegenüber einem in etwa ebenen Untergrund zum distalen Ende hin abfallende Stellung gebracht. Anschließend wird durch Relativverlagerung der Trageinrichtung und der Halteeinrichtung eine Kante des Transportgutes auf dem Untergrund aufgesetzt. Unter Beibehaltung des Haltekontaktes zwischen der Halteeinrichtung und dem Transportgut wird dann die Trageinrichtung unter dem Transportgut herausgefahren, vorzugsweise, indem zunächst durch Verkippen der Berührkontakt mit dem Transportgut gelöst wird. Nach Herausfahren der Trageinrichtung wird das Transportgut mittels der Halteeinrichtung abgesenkt, bis es vollständig auf dem Untergrund aufliegt.

### Kurzbeschreibung der Zeichnungen

Weitere Aspekte und Vorteile der Erfindung ergeben sich außer aus den Ansprüchen auch aus der nachfolgenden Beschreibung von bevorzugten Ausführungsbeispielen der Erfindung, die nachfolgend erläutert werden. Dabei zeigen:
- Fig. 1a bis 1c: einen Robotergreifer in drei Relativstellungen der jeweiligen Verlagerungseinrichtung zur jeweiligen Trageinrichtung, wobei ein solcher Robotergreifer nicht Teil der Erfindung ist;
- Fig. 1d: eine Variante zur Ausführungsform der Figuren 1a bis 1c,
- Fig. 2a bis 3c: weitere Robotergreifer mit verschiedenen Relativstellungen der jeweiligen Verlagerungseinrichtung zur jeweiligen Trageinrichtung, wobei solche Robotergreifer nicht Teil der Erfindung sind;
- Fig. 4 a bis 7c: Ausführungsformen eines erfindungsgemäßen Robotergreifers
- Fig. 8 und 8a bis 8f: einen Beladevorgang auf den Robotergreifer der Figuren 1a bis 1c, wobei ein solcher Vorgang nicht Teil der Erfindung ist;
- Fig. 9: die geometrischen Verhältnisse beim Verbinden der Halteeinrichtung des Robotergreifers der Figuren 1a bis 1 c mit dem Transportgut,
- Fig. 10: eine Alternative hinsichtlich des in den Figuren 8a bis 8f dargestellten Beladezustandes des Robotergreifers, und
- Fig. 11a, 11 b, 12a, 12b: Abladevorgänge von einer gegenüber den Figuren 7a bis 7c abgewandelten Gestaltung eines Robotergreifers.

### Detaillierte Beschreibung der Ausführungsbeispiele

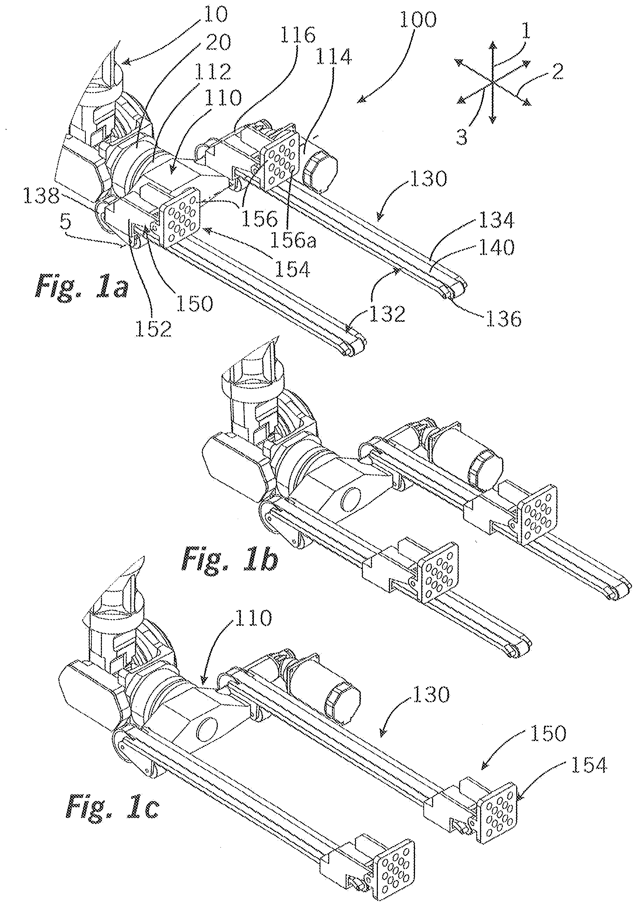

Die Figuren 1a bis 1c zeigen einen Robotergreifer 100, der über eine Greiferbasis 110 verfügt, an der eine Kopplungseinrichtung 112 in Form eines Kopplungsflansches zur Verbindung mit einer Kopplungseinrichtung 20 eines Roboterarms 10 vorgesehen ist. Die Greiferbasis 110 kann somit durch eine Bewegung des Roboterarms 10 hinsichtlich ihrer Position und Ausrichtung verändert werden.

Der Robotergreifer 100 verfügt weiterhin über eine Trageinrichtung 130 mit zwei Tragzinken 132, die sich von der Greiferbasis 110 in Greiferlängsrichtung 2 erstrecken. Diese Tragzinken 132 weisen jeweils einen ortsfest an der Greiferbasis 110 angebrachten Grundkörper 134 auf, an dessen distalen Enden Umlenkrollen 136 vorgesehen sind. Am gegenüberliegenden proximalen Ende der Tragzinken 132 sind Antriebsrollen 138 vorgesehen, die durch einen ortsfest zur Greiferbasis 110 angeordneten Elektromotor 114 mittels eines Getriebes 116 synchron angetrieben werden. Um die Antriebsrollen 138 und die Umlenkrollen 136 ist die je Tragzinken jeweils ein Transportband 140 gelegt, welches somit durch den Motor 114 in Greiferlängsrichtung 2 verfahren werden kann und welches mittels seines oben liegenden Abschnittes eine Auflagefläche für Transportgut bildet.

Verschiebbar auf den Grundkörpern 134 der Tragzinken 132 ist eine Verlagerungseinrichtung 150 vorgesehen, die je Tragzinken 132 über einen Hauptabschnitt 152 verfügen, die gegenüber dem zugeordneten Grundkörper 134 des jeweiligen Tragzinkens 132 verschiebbar geführt ist. Um eine horizontale Schwenkachse 5 schwenkbar gegenüber diesem Hauptabschnitt 152 ist eine Halteeinrichtung 154 vorgesehen, die über zwei Haltesektionen 156 verfügt. Diese Haltesektionen 156 der Halteeinrichtung 154 sind jeweils dafür ausgebildet, auf ein an ihnen anliegendes Transportgut eine Haltekraft auszuüben, die eine Verlagerung des Transportgutes entgegenwirkt. Diese Halteeinrichtung 154 ist vorliegend lediglich beispielhaft als Unterdruckhalteeinrichtung ausgebildet. Zu diesem Zweck sind an den Haltesektionen 156 Öffnungen 156a vorgesehen, an denen mittels einer nicht näher dargestellten Saugeinrichtung ein Unterdruck erzeugt werden kann. Bei den nachfolgend noch erläuterten weiteren Ausführungsformen kann ebenfalls eine solche Unterdruck-Halteeinrichtung vorgesehen sein. Es sind jedoch auch anderweitige Gestaltungen wie beispielsweise Elektromagnet-Halteeinrichtungen denkbar.

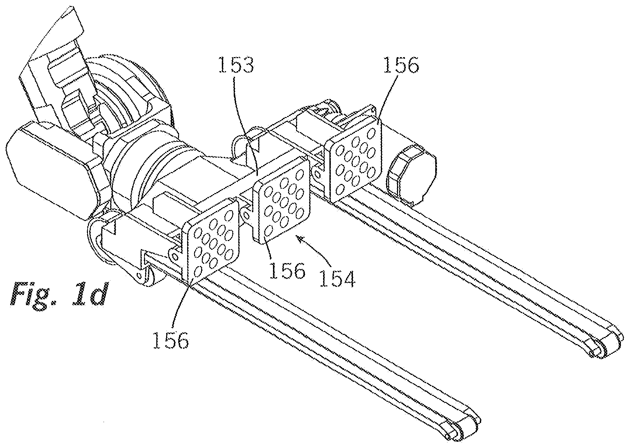

Die Verlagerungseinrichtung 150 mit der um die Achse 5 schwenkbar daran angelenkten Halteeinrichtung 154 ist in der in den Figuren 1a bis 1 c dargestellten Weise in Greiferlängsrichtung 2 verfahrbar, wobei Figur 1 c eine erste Relativendlage zeigt und wobei Figur 1 a eine zweite Relativendlage zeigt. Figur 1 b zeigt einen Zwischenstand.

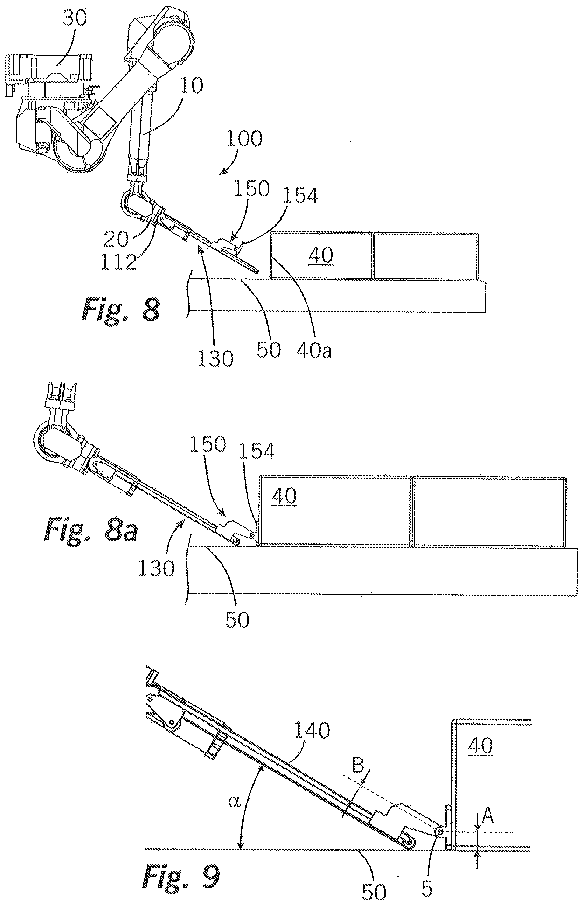

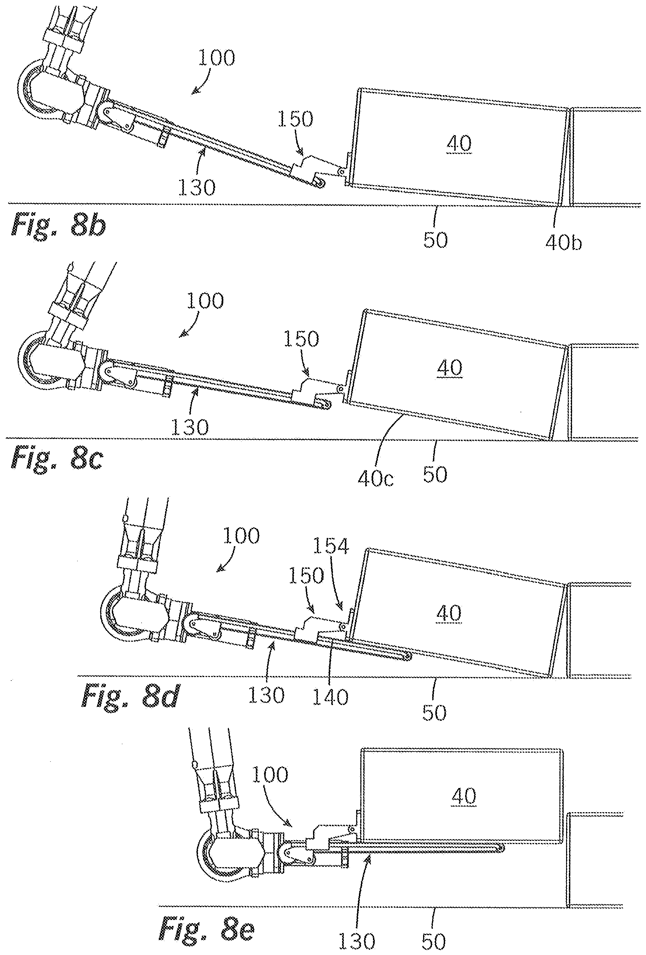

In der ersten Relativendlage, die in der Figur 1 c dargestellt ist, ragen die Haltesektion 156 der Halteeinrichtung 154 über die Trageinrichtung 130 hinaus und bilden somit das distale Ende des Robotergreifers 100. Der Zweck dieser weiten Verfahrbarkeit wird im Weiteren noch im Zusammenhang mit den Figuren 8 bis 10 erläutert.

Die Figur 1 d zeigt eine geringfügige Abwandlung von der Ausgestaltung der Figuren 1a bis 1 c. Bei der Gestaltung gemäß der Figur 1 d sind die beiden Hauptabschnitte 152 der Verlagerungseinrichtung 150 durch ein Joch 153 verbunden, an dem eine dritte mittige Haltesektion 156 vorgesehen ist, die in gleicher Weise ausgebildet ist, wie die außenliegenden Haltesektionen 156. Hierdurch kann in noch flexiblerer Weise eine örtlich unterschiedliche Haltekraft an den Haltesektionen 156 erzeugt werden.

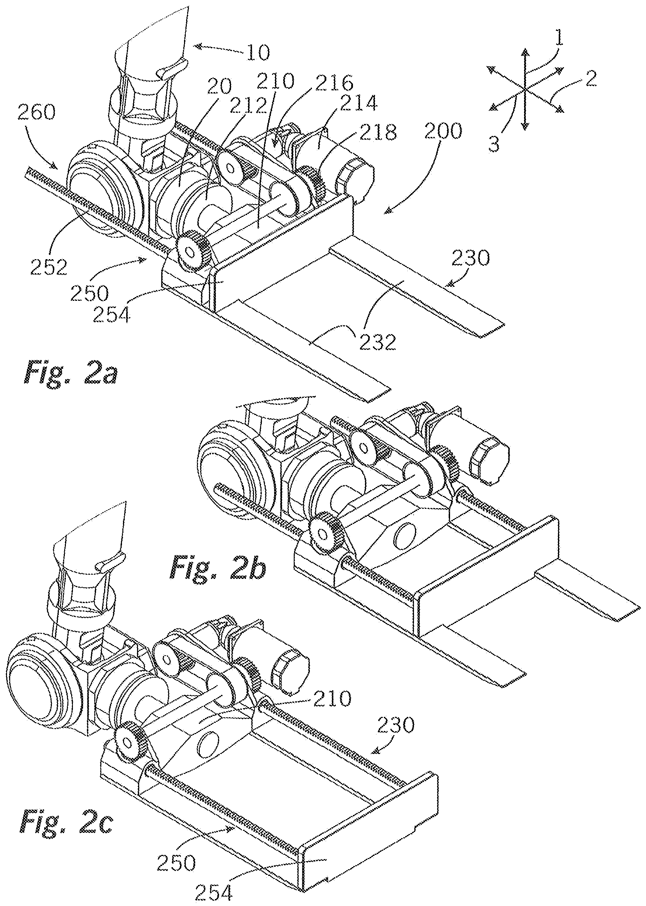

Die Ausgestaltung der Figuren 2a bis 2c zeigen einen Robotergreifer 200, der hinsichtlich der Kinematik ähnlich ausgebildet ist wie die Ausführungsform der Figuren 1a bis 1 c. Wiederum ist eine Greiferbasis 210 mit einer Kopplungseinrichtung 212 zur Kopplung an einen Roboterarm 10 vorgesehen. Auch bei dieser Ausgestaltung ist die Trageinrichtung 230 fest mit der Roboterbasis 210 verbunden, wobei bei dieser Ausgestaltung kein Transportband vorgesehen ist, so dass die zwei Zinken 232 der Trageinrichtung 230 jeweils in ihrer Gesamtheit ortsfest zur Greiferbasis 210 vorgesehen sind. Die Verlagerungseinrichtung 250 weist zwei Zahnstangen 252 auf, an deren distalen Ende 252a die Halteeinrichtung 254 vorgesehen ist. Diese kann entsprechend der Ausgestaltung der Figuren 1a bis 1 c schwenkbar angelenkt sein oder gegenüber den Zahnstangen 252 feststehend ausgebildet sein.

Über einen Motor 214 und ein Getriebe 216 sowie zwei Zahnräder 218 ist eine Verlagerung der Verlagerungseinrichtung 250 gegenüber der Greiferbasis 210 und der Trageinrichtung 230 möglich, wie der Übergang vom Zustand der Figur 2a in den Zustand der Figur 2c zeigt. Dabei ist in der ersten Relativendlage der Figur 2c die Halteeinrichtung 254 wiederum noch vor den distalen Enden der Zinken 232 angeordnet.

In der zweiten Relativendlage der Figur 2a erstrecken sich die Zahnstangen 252 über das durch die Kopplungseinrichtung 212 dem Roboter zugewandte Ende des Robotergreifers 200 hinaus bis in den Bereich des Roboterarms 10. Durch diese Gestaltung mit zwei voneinander beabstandeten und einen dazwischen liegenden Freiraum 260 definierenden Zahnstangen 252 wird eine sehr zuverlässige Möglichkeit zur Bewegung der Verlagerungseinrichtung 250 geschaffen, ohne dass die Beweglichkeit des Roboterarms 10 hierdurch signifikant eingeschränkt würde.

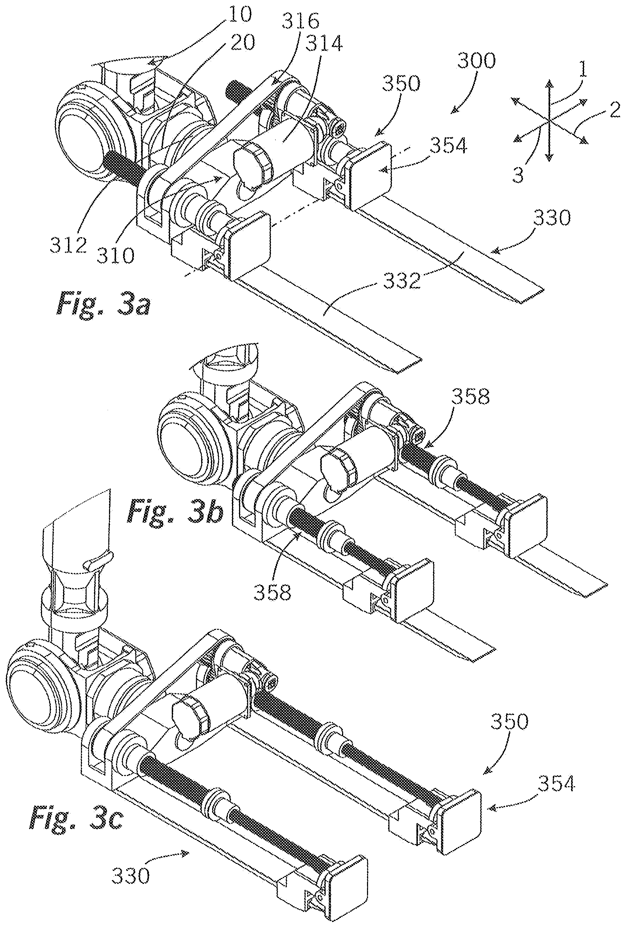

Auch der Robotergreifer 300 der Figuren 3a bis 3c ist hinsichtlich der Bewegbarkeit der Trageinrichtung 330 und der Verlagerungseinrichtung 350 gegenüber der mit eine Kopplungseinrichtung 312 ausgebildeten Greiferbasis 320 identisch mit der Gestaltung der Figuren 2a bis 2c. Wiederum wird die Trageinrichtung 330 durch zwei ortsfest zur Greiferbasis 320 angeordnete Tragzinken 332 gebildet, die als Führung der in Greiferlängsrichtung demgegenüber beweglichen Verlagerungseinrichtung 350 dienen. Ähnlich den Figuren 1a bis 1 c ist an der zweiteilig ausgebildeten Verlagerungseinrichtung 350 um eine Schwenkachse 5 verschwenkbare Halteeinrichtung 354 mit separaten Haltesektionen 356 vorgesehen, die gemeinsam eine Halteeinrichtung 352 bilden.

Die Besonderheit der Ausgestaltung der Figuren 3a bis 3c ist hinsichtlich des Getriebes 316 zur Bewegung der Verlagerungseinrichtung 354 gegeben. Dieses Getriebe 316, mittels dessen der Motor 314 die Verlagerungseinrichtung 350 bewegt, weist zwei Teleskopspindeln 358 auf, die dafür sorgen, dass auch in der zweiten Relativendlage der Halteeinrichtung 350, dargestellt in Figur 3a, die Erstreckung des Robotergreifers 300 in Richtung des Roboterarms 20 die Kopplungseinrichtung 312 nur geringfügig überragt.

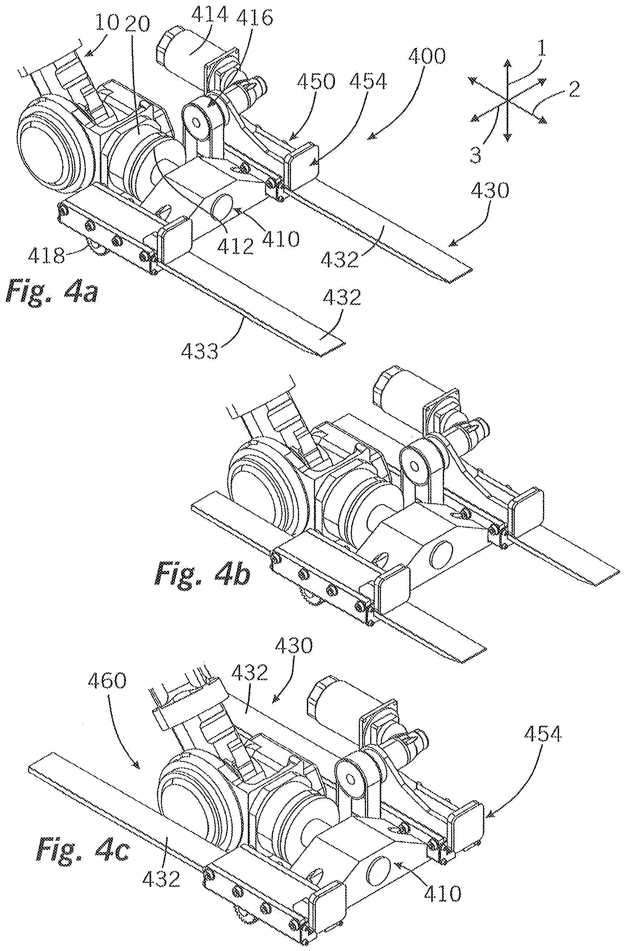

Die Ausgestaltung des erfindungsgemäßen Robotergreifers 400, die in den Figuren 4a bis 4c dargestellt ist, weist einen wesentlichen Unterschied zu den vorhergehenden Ausführungsformen auf. Der Robotergreifer 400 verfügt zwar übereinstimmend mit den vorausgegangenen Ausführungsformen über eine Greiferbasis 410, die mittels einer Kopplungseinrichtung 412 mit einem Roboterarm 10 verbunden ist. Die Verlagerungseinrichtung 450 mit der Halteeinrichtung 454, bestehend aus zwei Haltesektionen 456, ist jedoch ortsfest zu dieser Greiferbasis 410 angeordnet. Zur Erzeugung einer Relativbewegung zwischen der Verlagerungseinrichtung 450 und der aus zwei Zinken 432 bestehenden Trageinrichtung 430 ist lediglich eine Verlagerbarkeit der Trageinrichtung 430 gegenüber der Greiferbasis 410 vorgesehen.

Zu diesem Zweck sind an der Unterseite der Zinken 432 Verzahnungen 433 vorgesehen, die mit Zahnrädern 418 eines Getriebes 416 kämmen, an welches ein Motor 414 angeschlossen ist.

Wie die erste Relativendlage der Figur 4c zeigt, ist nichtsdestotrotz ein Zustand erreichbar, in dem die Verlagerungseinrichtung 450 das distale Ende des Robotergreifers 400 in Greiferlängsrichtung 2 definiert.

Ähnlich der Gestaltung der Figuren 2a und 2c ist wiederum vorgesehen, dass der für die Relativbewegung der Verlagerungseinrichtung 450 und der Trageinrichtung 430 erforderliche Bauraum sich bis hinter die Kopplungseinrichtung 412 erstreckt. Wie Figur 4c zeigt, sind in der ersten Relativendlage die beiden Zinken 432 beidseitig der Kopplungseinrichtung 412 weit über das durch die Kopplungseinrichtung 412 zuvor definierte proximale Ende des Robotergreifers 400 nach hinten verlagert. In ähnlicher Weise wie die Zahnstangen 252 bei der Ausführungsform der Figuren 2a und 2c behindern sie aufgrund des zwischen ihnen liegenden Freiraums 460 dort eine Bewegung des Roboterarms 10 nicht oder kaum.

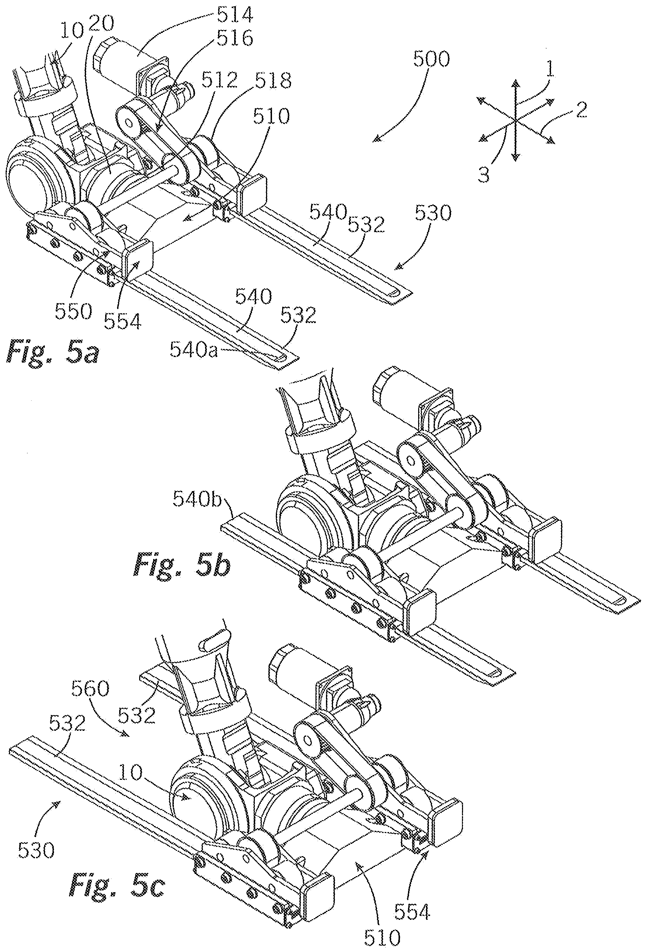

Bei dem Robotergreifer 500 der Figuren 5a bis 5c ist die grundsätzliche Relativbeweglichkeit der Hauptkomponenten mit der Ausführungsform der Figuren 4a bis 4c vergleichbar. Die Verlagerungseinrichtung 550 mit der Halteeinrichtung 554 ist wiederum gegenüber einer Greiferbasis 510 und einer Kopplungseinrichtung 512 des Robotergreifers 500 ortsfest angeordnet. Wiederum sind lediglich die Zinken 532 der Trageinrichtung 530 in Greiferlängsrichtung 2 gegenüber der Greiferbasis 510 und der Verlagerungseinrichtung 550 beweglich. Das Maß der Beweglichkeit entspricht dabei im Wesentlichen der Ausgestaltung der Figuren 4a und 4c, so dass in der ersten Relativendlage, dargestellt in Figur 5c, erhebliche Anteile der Trageinrichtung 530 wiederum rückseitig über die Greiferbasis 510 und die Kopplungseinrichtung 512 hinausragen, wobei ein Freiraum 560 zwischen Ihnen Platz für den Roboterarm 10 lässt.

Abweichend von der Ausgestaltung der Figuren 4a bis 4c erfolgt der Antrieb jedoch über eine mit seinem vorderen Ende 540a und seinem hinteren Ende 540b an den Zinken 532 festgelegten Zahnriemen 540, der mittels einer Ω-Umschlingung um Antriebsritzel 518 gelegt ist. Die beiden Antriebsritzel 518 sind Teil eines Getriebes 516, welches mittels eines Motors 514 angetrieben wird. Die beiden Zahnriemen 540 an den beiden Tragzinken 532 wirken über eine in der Perspektive der Figuren 5a bis 5c nicht zu erkennende unterseitige Verzahnung mit den Ritzeln 518 zusammen.

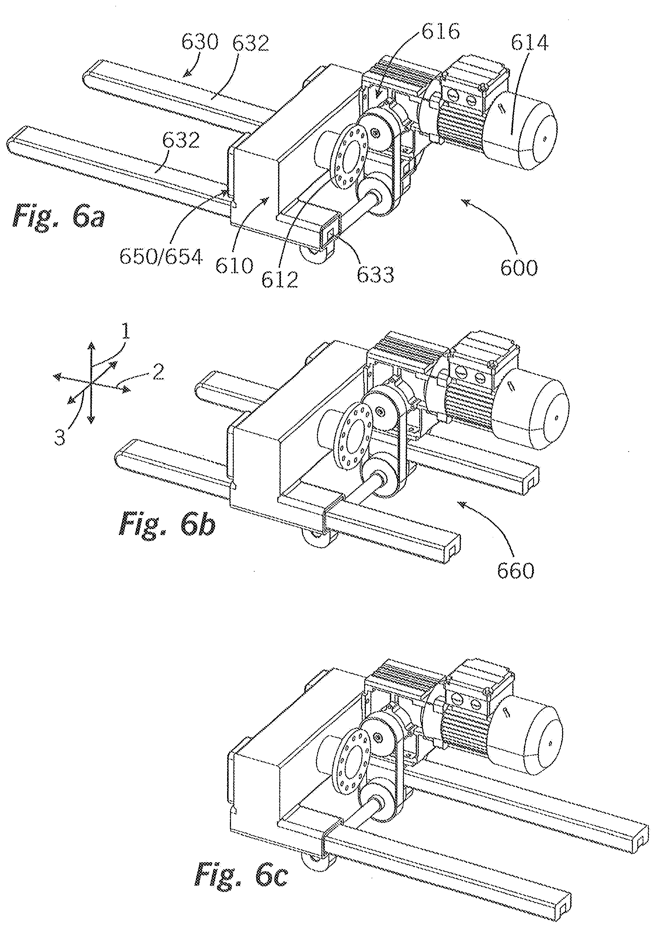

Die Ausgestaltung der Figuren 6a bis 6c ist abweichend von den vorangegangenen Ausgestaltungen von der gegenüberliegenden Seite aus gesehen dargestellt, so dass die Kopplungseinrichtung 612, die an der Greiferbasis 610 vorgesehen ist, gut erkennbar ist. Ebenso wie bei den Gestaltungen der Figuren 4a bis 4c und 5a bis 5c ist die Verlagerungseinrichtung 650 mit der Halteeinrichtung 654 ortsfest an der Greiferbasis 610 vorgesehen bzw. mit dieser identisch. Gegenüber der Greiferbasis 610 beweglich sind wiederum zwei Zinken 632 einer Trageinrichtung 630, welche über ein Getriebe 616 mit einem Motor 614 gekoppelt sind.

Gut ersichtlich ist aufgrund der Perspektive der Figuren 6a bis 6c, dass die Zinken 632 in der ersten relativ Endstellung der Figur 6c bis weit hinter die Kopplungseinrichtung 612 verfahren sind, wobei sie hier wiederum durch den zwischen ihnen liegenden Freiraum 660 eine Bewegung des in diesem Ausführungsbeispiel nicht dargestellten Roboterarms nicht behindern.

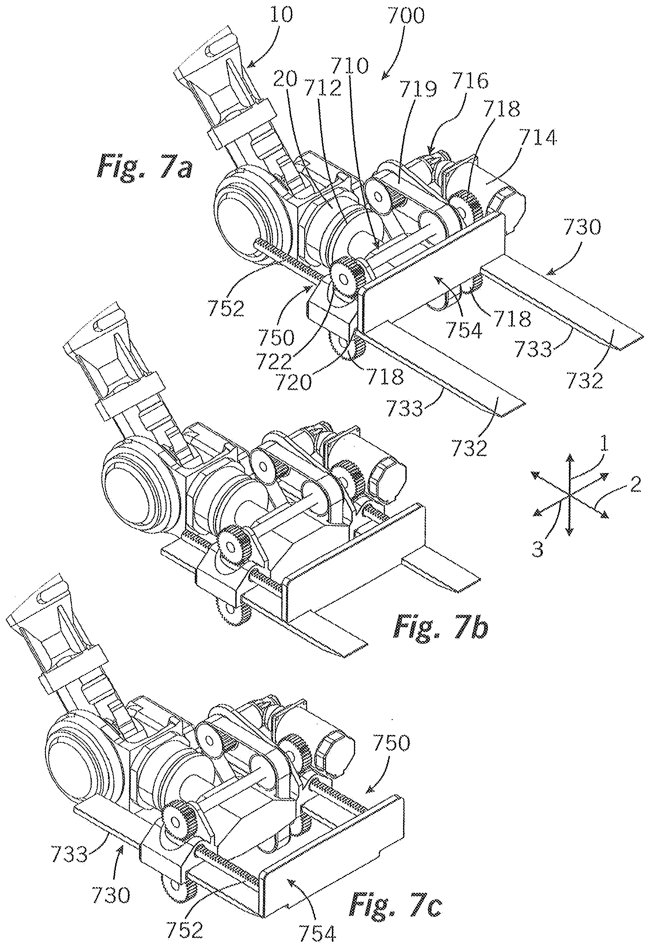

Die Ausgestaltung des Robotergreifers 700 gemäß der Figuren 7a bis 7c unterscheidet sich deutlich von den vorangegangenen Ausführungsformen, da sowohl die Verlagerungseinrichtung 750 mit der Halteeinrichtung 754 als auch die Trageinrichtung 730 mit den Zinken 732 gegenüber der Greiferbasis 710 und der Kopplungseinrichtung 712 in Greiferlängsrichtung 2 beweglich sind. Die Zinken 732 sind in an der Greiferbasis 710 vorgesehenen Führungen 720 geführt und weisen an ihrer Unterseite ähnlich der Gestaltung der Figuren 4a bis 4c eine Verzahnung 733 auf. Die Verlagerungseinrichtung 750 dagegen verfügt ähnlich der Gestaltungen der Figuren 2a bis 2c über Zahnstangen 752, an deren vorderseitigem Ende die Halteeinrichtung 754 vorgesehen ist. Diese Zahnstangen 752 sind ebenfalls in greiferbasisfesten Führungen 722 geführt.

Das Getriebe 716 des Robotergreifers 700, mittels dessen der Motor 714 sowohl die Trageinrichtung 730 als auch die Verlagerungseinrichtung 750 gegenüber der Greiferbasis 710 bewegt, weist insgesamt vier Ritzel 718 auf, die über einen Riemen 719 synchronisiert sind, so dass eine synchronisierte, jedoch gegenläufige Bewegung der Trageinrichtung 730 und der Verlagerungseinrichtung 750 durch den Motor bewirkt werden kann.

Durch die Tatsache, dass sowohl die Verlagerungseinrichtung 750 als auch die Trageinrichtung 730 gegenüber der Greiferbasis 710 beweglich sind, ergibt sich der Vorteil einer sehr kompakten Form des Robotergreifers 700 in dessen erster Endlage, dargestellt in Figur 7c. Es ist ersichtlich, dass in dieser ersten Endlage die Zinken 732 rückseitig kaum über die Kopplungseinrichtung 712 hinausragen. Auch in der zweiten Endlage, dargestellt in Figur 7a, ragen die Zahnstangen 752 nur in geringem Maße über die Kopplungseinrichtung 712 hinaus. Hierdurch wird eine noch unbeschränktere Bewegung des Robotergreifers 700 gegenüber dem Roboterarm 10 als bei den vorstehenden Ausführungsformen erzielt.

Die Figuren 8 bis 10 verdeutlichen die Funktionsweise eines Robotergreifers am Beispiel des Robotergreifers der Figuren 1a bis 1 c. Der Robotergreifer 100 ist in Figur 8 gemeinsam mit dem Roboterarm 10 in der Gesamtheit dargestellt. Der Roboterarm 10 ist seinerseits an einer stationären Haltevorrichtung 30 schwenkbeweglich gelagert.
Zum Ergreifen eines Transportgutes 40, welches vorliegend beispielsweise einen zu verladenden Koffer repräsentiert, wird der Robotergreifer 100 zunächst in der Nähe einer Seitenwand 40a des Transportgutes 40 angeordnet, wobei er dabei eine Stellung einnimmt, in der hin zu seinem vorderen Ende hin abgesenkt ist.
Wie Figur 8a zeigt, wird zum Aufladen des Transportgutes 40 zunächst die Verlagerungseinrichtung 150 mit der Halteeinrichtung 154 bis an das vordere Ende der Transporteinrichtung 130 verfahren. Wie im Zusammenhang mit den Figuren 1a bis 1 c erläutert wurde, geschieht dies mittelbar über den Antrieb des Tragriemens 140. Durch den Roboterarm 10 wird dabei eine Positionierung der Halteeinrichtung 154 am Transportgut 40 bewirkt, die in Figur 9 detailliert dargestellt ist. Die Halteeinrichtung 154 wird derart am Transportgut 40 positioniert, dass die Höhe A der Schwenkachse 5 über dem Untergrund 50, auf dem das Transportgut 40 aufliegt, der Strecke B entspricht, wobei B der Abstand der Schwenkachse 5 von dem Transportband 140 in Greiferhochrichtung 1 ist.
Der entsprechend den Figuren 8a und 9 hergestellte Haltekontakt zwischen der Halteeinrichtung 154 und dem Transportgut 40 kann somit unverändert bleiben, auch wenn das Transportgut 40 auf der durch das Transportband 140 gebildeten Auflagefläche der Transporteinrichtung 130 flächig aufliegt.

Wie oben erläutert, ist die Halteeinrichtung 154 dafür ausgebildet, die zur Manipulation des Transportgutes 40 erforderliche Haltekraft durch Unterdruck herzustellen. Im Zustand der Figuren 8a und 9 geschieht dies, so dass anschließend, wie in Figur 8b dargestellt ist, das Transportgut 40 auf seiner linken Seite durch eine Gesamtverlagerung des Robotergreifers 100 angehoben werden kann, während es mit der unteren Kante 40b auf der gegenüberliegenden Seite weiterhin auf dem Boden aufliegt. Sobald so der Zustand der Figur 8c erreicht ist, in dem eine Unterseite 40c des Transportgutes 40 mit der Trageinrichtung 130 fluchtet, wird die Trageinrichtung 130 entsprechend der Figur 8d unter das Transportgut 40 gefahren. Dies erfolgt durch Bewegung des Robotergreifers 100 in seiner Gesamtheit mittels des Roboterarm 20, wobei zeitgleich die Verlagerungseinrichtung 150 gemeinsam mit der Halteeinrichtung 154 eine gegenläufige Bewegung relativ zur Trageinrichtung 130 durchführt, so dass das Transportgut 40 in dieser Phase kaum bewegt wird. Zu einem ungewünschten Reibkontakt zwischen der Oberseite der Transporteinrichtung 130, die durch das Transportband 140 gebildet wird, und dem Transportgut 40 kommt es nicht, da das Transportband 140 gemeinsam mit der Verlagerungseinrichtung 150 relativ zu den übrigen Teilen des Robotergreifers 100 verfahren wird. Sobald die Trageinrichtung 130 bis über den Schwerpunkt des Transportgutes 40 hinaus unter das Transportgut 40 verfahren ist, kann das Transportgut 40 problemlos angehoben werden. Aufgrund der Haltekraft an der Halteeinrichtung 154 kann jedoch auch schon zuvor durch Anheben des distalen Endes des Robotergreifers 100 eine vollständige Trennung des Transportgutes 40 vom Untergrund 50 bewirkt werden.

Der Robotergreifer erlaubt somit eine das Transportgut schonende Aufnahme. Beschädigungen des Transportgutes sind nicht zu erwarten.

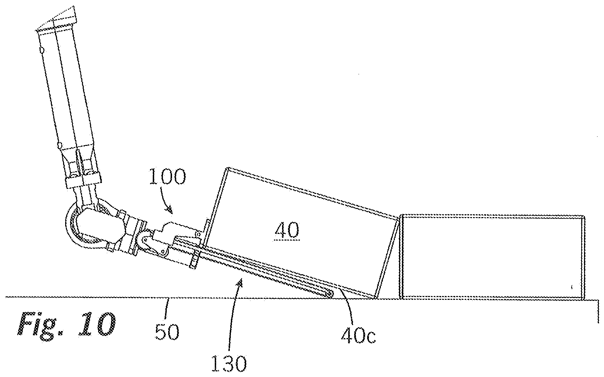

Figur 10 zeigt dennoch eine je nach Ausgestaltung des Robotergreifers 100 vorteilhaftere Variante. Der Zustand der Figur 10 entspricht hinsichtlich der Phase des Beladens dem Zustand der Figur 8d. Allerdings ist bei dieser Variante vorgesehen, dass die Transporteinrichtung 130 nicht in Erstreckungsrichtung der Unterseite 40c des Transportgutes 40 unter dieses fährt, sondern in einer hiervon leicht divergierenden Richtung, so dass es erst nach dem Zwischenzustand, der in Figur 10 dargestellt ist, zum intensiven Berührkontakt zwischen der Transporteinrichtung und dem Transportgut 40 kommt, wenn ausgehend von dem Zustand der Figur 10 das Transportgut 40 mit der Trageinrichtung 130 angehoben wird.
Ein bestimmungsgemäßes Abladen des Transportgutes 40 erfolgt in umgekehrter Reihenfolge gegenüber dem beschriebenen Beladen.

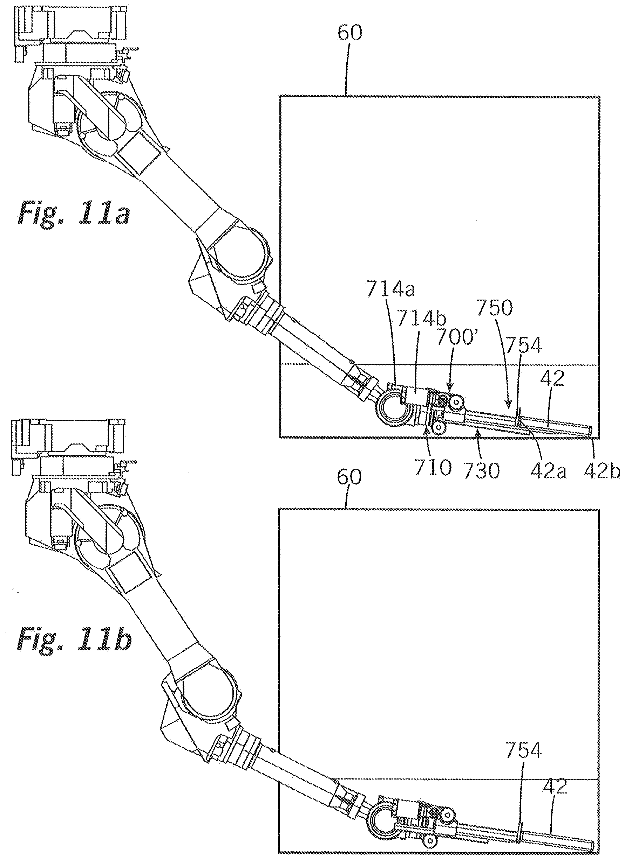

Die Figuren 11a, 11 b, 12a und 12b zeigen Verladevorgänge mit einem erfindungsgemäßen Robotergreifer 700'. Dieser unterscheidet sich von dem Robotergreifer gemäß der Figuren 7a bis 7c im Wesentlichen nur durch zwei Aspekte: Zum einen sind die Verlagerungseinrichtung 750 und die Trageinrichtung 730 jeweils in höherem Maße in Greiferlängsrichtung 2 gegenüber der Greiferbasis 710 verlagerbar. Zum anderen sind statt einem gemeinsamen Motor zwei Motoren 714a, 714b vorgesehen, die eine getrennte Verlagerung der Verlagerungseinrichtung 750 einerseits und der Trageinrichtung 730 andererseits gegenüber der Greiferbasis 710 gestatten.
Diese Modifikationen an dem Robotergreifer 700' gegenüber dem Robotergreifer 700 gestatten eine höhere Flexibilität der Nutzung, wodurch im Resultat die Reichweite des Roboters erhöht wird. Die spielt besonders deswegen eine erhebliche Rolle, da es wirtschaftlichen Gründen vorteilhaft ist, vergleichsweise kleine Roboter zu verwenden. Um mit diesen dennoch einen im Flugbetrieb üblichen Container 60 vollständig beladen zu können, ist die erhöhte Reichweite erforderlich oder zumindest von Vorteil.

Die Figuren 11a und 11 b zeigen einen Abladevorgang eines Gepäckstücks 42 in der in der Perspektive der Figuren 11 a und 11 b rechten unteren Ecke des Containers 60. Vor Abladen des Gepäckstücks 42 liegt dieses auf der Trageinrichtung 730 auf, die dabei soweit wie möglich in Richtung des distalen Endes des Robotergreifers 700' verfahren ist. Auch die Verlagerungseinrichtung 750 ist weit in Richtung des distalen Endes des Robotergreifers 700' verfahren, so dass der Schwerpunkt des Gepäckstücks 42 gerade noch oberhalb der Trageinrichtung 730 liegt. In diesem Zustand wird die rechte untere Kante 42b des Gepäckstücks 42 auf den Boden des Containers 60 abgelegt. Dies ist in Figur 11a dargestellt.

Anschließend wird die Trageinrichtung 730 zum proximalen Ende des Robotergreifers 700 verfahren, bis sie, wie in Figur 11 b dargestellt ist, nicht mehr unterhalb des Gepäckstücks 42 angeordnet ist. Ausgehend von diesem in Figur 11 b dargestellten Zustand kann das Gepäckstück mittels der Halteeinrichtung 754 gehalten sanft abgelegt werden.

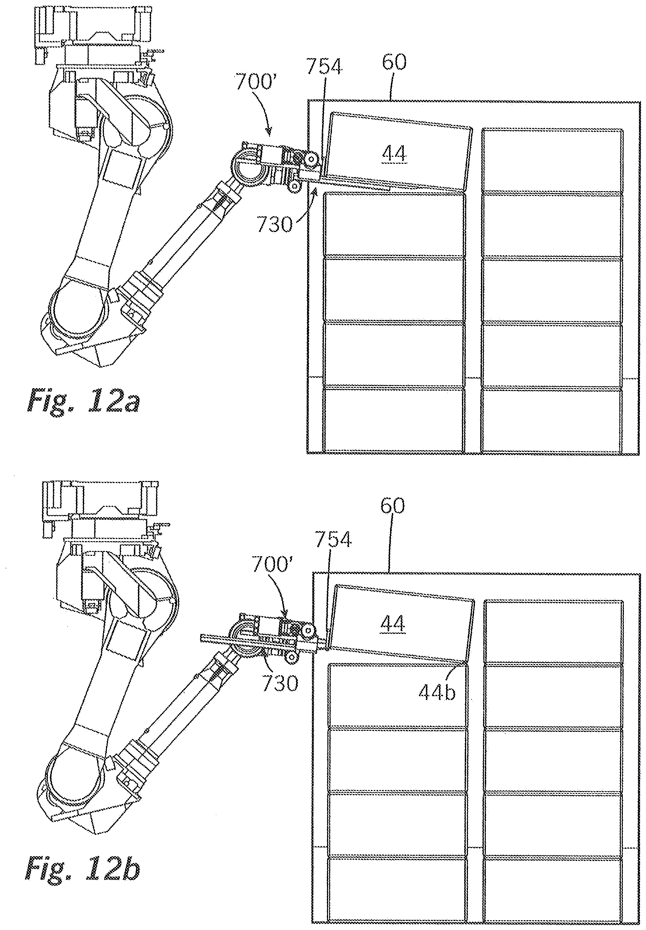

Die Figuren 12a und 12b zeigen das Ablegen eines Gepäckstücks 44 in der gegenüberliegenden linken oberen Ecke des Containers 60. Dieses Ablegen erfolgt im Wesentlichen wie das Ablegen, welches in den Figuren 11a und 11 b dargestellt ist. Der wesentliche Unterschied liegt jedoch darin, dass die Verlagerungseinrichtung 750 mit der Halteeinrichtung 754 zu Beginn des Abladevorgangs in ihrer der Greiferbasis 710 nächsten Endlage angeordnet ist, so dass auch das Gepäckstück 44 vor dem Abladen sehr nahe an der Greiferbasis 710 angeordnet ist. Sobald wie in Figur 12a dargestellt die untere rechte Kante 44b des Gepäckstücks abgesetzt wurde, wird die Trageinrichtung 730 zurückgefahren. Gleichzeit wird auch der Robotergreifer 700 in seiner Gesamtheit ein Stück weit zurückgefahren, um die Trageinrichtung vollständig unter dem Gepäckstück 44 herausziehen zu können. Weiterhin wird zeitgleich die Verlagerungseinrichtung 750 mit der Halteeinrichtung 754 in geringem Maße ausgefahren, um das Gepäckstück 44 in seiner Position zu halten. So wird der Zustand der Figur 12b hergestellt, in dem der Robotergreifer 700' nur noch mit der Halteeinrichtung 754 im Kontakt mit dem Gepäckstück 44 ist. Ausgehend von dieser Position kann das Gepäckstück durch die Halteeinrichtung 754, die gemeinsam mit dem Robotergreifer 700 bewegt wird, sanft abgelegt werden.

Die in den Figuren 11a bis 12b dargestellte Variante eines erfindungsgemäßen Robotgreifers 700' gestattet über die separate Bewegbarkeit der Verlagerungseinrichtung 750 und der Trageinrichtung 730 somit eine in der Praxis erhebliche Reichweitenerweiterung.

## Patentansprüche

1. Robotergreifer zum Ergreifen, Transportieren und Ablegen von Transportgütern, insbesondere von Gepäckstücken wie Koffern und Reisetaschen, mit
- einer Greiferbasis (410) mit einer Kopplungseinrichtung (412) zur Anbringung an einem Roboterarm (10),
- einer in einer Greiferlängsrichtung (2) erstreckten Trageinrichtung (430) mit einer Auflagefläche, die der Auflage des Transportgutes dient und die sich im Wesentlichen in Greiferlängsrichtung (2) und einer Greiferquerrichtung (3) erstreckt,
- einer Verlagerungseinrichtung (450), die in einer Greiferhochrichtung (1) oberhalb der Trageinrichtung (430) angeordnet ist und die der Kraftbeaufschlagung des Transportgutes in Greiferlängsrichtung (2) dient, wobei
- die Trageinrichtung (430) gegenüber der Greiferbasis (410) und der Verlagerungseinrichtung (450) in Greiferlängsrichtung (2) verlagerbar ist,
- die Trageinrichtung (430) an ihrem der Greiferbasis (410) zugewandten proximalen Ende zwei voneinander in Greiferquerrichtung (3) beabstandete Endabschnitte (432) aufweist, die einen dazwischenliegenden Freiraum (460) aussparen, und
- die Endabschnitte (432) der Trageinrichtung (430) in der der Greiferbasis zugewandten Endlage der Trageinrichtung (430) jeweils in Greiferlängsrichtung (2) hinter der Kopplungseinrichtung (412) angeordnet sind,
**dadurch gekennzeichnet, dass**
die Endabschnitte (432) der Trageinrichtung (430) in der der Greiferbasis zugewandten Endlage der Trageinrichtung (430) in Greiferquerrichtung (3) gegenüberliegend beidseitig auf Höhe der Kopplungseinrichtung (412) angeordnet sind.

2. Robotergreifer nach Anspruch 1,
**dadurch gekennzeichnet, dass**
die Trageinrichtung gegenüber der Greiferbasis in Greiferlängsrichtung verlagerbar ist, wobei an gegenüberliegenden Enden der Trageinrichtung ein Antriebsriemen befestigt ist und wobei der Antriebsriemen in Form eines Ω um zwei ortsfest zur Greiferbasis vorgesehene Führungsabschnitte sowie um ein Antriebsrad gelegt ist, welches um eine ortsfest zur Greiferbasis angeordnete Antriebsachse drehbar gelagert ist.

3. Handhabungsroboter, insbesondere zum Ergreifen, Transportieren und Ablegen von Transportgütern, insbesondere von Gepäckstücken wie Koffern und Reisetaschen, mit
- einer ortsfest angeordneten oder über ein Schienensystem verlagerbaren Roboterbasis,
- einem gegenüber der Roboterbasis beweglichen Roboterarm (10), an dessen Ende eine Kopplungseinrichtung (20) zur Ankopplung eines Robotergreifers vorgesehen ist, **dadurch gekennzeichnet, dass**
an der Kopplungseinrichtung (20) des Roboterarms (10) ein Robotergreifer (400) nach einem der vorstehenden Ansprüche angebracht ist.

4. Verfahren zum Ergreifen eines Transportgutes von einem im Wesentlichen ebenen Untergrund mit einem Robotergreifer nach einem der Ansprüche 1 bis 2,
**dadurch gekennzeichnet, dass** die Verlagerungseinrichtung eine Halteeinrichtung aufweist, und dass ausgehend von einem Ausgangszustand, in dem die Trageinrichtung und die Halteeinrichtung in einer Relativlage sind, in der die Trageinrichtung hinter der Halteeinrichtung angeordnet ist,
- die Halteeinrichtung an eine Seitenfläche des Transportgutes herangefahren wird, während die Trageinrichtung in einer zu ihrem distalen Ende hin gegenüber dem Untergrund abfallenden Ausrichtung angeordnet ist,
- die Halteeinrichtung in Haltekontakt mit der Seitenfläche gebracht wird,
- die Halteeinrichtung, insbesondere der gesamte Robotergreifer mit der Halteeinrichtung, angehoben wird, so dass die im Kontakt mit der Halteeinrichtung befindliche Seitenfläche des Transportgutes bei gleichzeitigem Verkippen des Transportgutes angehoben wird,
- die Trageinrichtung relativ zur Halteeinrichtung nach vorne und somit unter das Transportgut verfahren wird und
- das Transportgut mittels der Trageinrichtung angehoben und dabei vom Untergrund getrennt.

5. Verfahren zum Ablegen eines Transportgutes von einem Robotergreifer nach einem der Ansprüche 1 bis 2,
**dadurch gekennzeichnet, dass**
die Verlagerungseinrichtung eine Halteeinrichtung aufweist, und dass ausgehend von einem Ausgangszustand, in dem das Transportgut auf der Trageinrichtung aufliegt und in Haltekontakt mit der Halteeinrichtung steht,
- die Trageinrichtung in eine gegenüber einem in etwa ebenen Untergrund abfallende Stellung gebracht wird,
- eine Kante des Transportgutes auf dem Untergrund aufgesetzt wird,
- die Trageinrichtung bei fortdauerndem Haltekontakt des Transportgutes mit der Halteeinrichtung unter dem Transportgut herausgefahren wird und
- das Transportgut mittels der Halteeinrichtung abgesenkt wird, bis es vollständig auf dem Untergrund aufliegt.

## Claims

1. Robot gripper for gripping, transporting and setting down articles, in particular baggage items such as suitcases and travel bags, having
- a gripper base (410) with a coupling device (412) for fitting on a robot arm (10),
- a carrying device (430), which extends in a longitudinal direction (2) of the gripper and has a bearing surface, which serves for bearing the article and extends essentially in the longitudinal direction (2) of the gripper and in a transverse direction (3) of the gripper,
- a displacement device (450), which is arranged above the carrying device (430), as seen in a vertical direction (1) of the gripper, and serves for applying force to the article in the longitudinal direction (2) of the gripper,
wherein
- the carrying device (430) can be displaced in the longitudinal direction (2) of the gripper in relation to the gripper base (410) and the displacement device (450),
- at its proximal end, which is directed towards the gripper base (410), the carrying device (430) has two end portions (432), which are spaced apart from one another in the transverse direction (3) of the gripper and leave free a clearance (460) between them, and
- in that end position of the carrying device (430) which is directed towards the gripper base, the end portions (432) of the carrying device (430) are arranged behind the coupling device (412), as seen in the longitudinal direction (2) of the gripper in each case,
**characterized in that**,
**in that** end position of the carrying device (430) which is directed towards the gripper base, the end portions (432) of the carrying device (430) are located opposite one another on either side, as seen in the transverse direction (3) of the gripper, level with the coupling device (412).

2. Robot gripper according to Claim 1,
**characterized in that**
the carrying device can be displaced in the longitudinal direction of the gripper in relation to the gripper base, wherein a drive belt is fastened at opposite ends of the carrying device, and wherein the drive belt is positioned in the form of a Ω around two guide portions provided in a stationary state in relation to the gripper base and around a drive wheel which is mounted such that it can be rotated about a drive axle arranged in a stationary state in relation to the gripper base.

3. Handling robot, in particular for gripping, transporting and setting down articles, in particular baggage items such as suitcases and travel bags, having
- a robot base, which is arranged in a stationary state or can be displaced via a rail system,
- a robot arm (10), which can be moved in relation to the robot base and at the end of which is provided a coupling device (20) on which to couple a robot gripper,
**characterized in that** a
robot gripper (400) according to either of the preceding claims is fitted on the coupling device (20) of the robot arm (10).

4. Method of gripping an article from an essentially planar underlying surface using a robot gripper according to either of Claims 1 and 2,
**characterized in that**
the displacement device has a retaining device, and **in that**, starting from a starting state, in which the carrying device and the retaining device are in a relative position in which the carrying device is arranged behind the retaining device,
- the retaining device is moved up to a side surface of the article while the carrying device is oriented in a state in which it slopes down in the direction of its distal end in relation to the underlying surface,
- the retaining device is brought into retaining contact with the side surface,
- the retaining device, in particular the entire robot gripper with the retaining device, is raised, and therefore that side surface of the article which is in contact with the retaining device is raised as the article is simultaneously tilted,
- the carrying device is displaced relative to the retaining device in the forward direction and therefore beneath the article, and
- the article is raised, and in the process separated from the underlying surface, by means of the carrying device.

5. Method of setting down an article using a robot gripper according to either of Claims 1 and 2,
**characterized in that**
the displacement device has a retaining device, and **in that**, starting from a starting state in which the article rests on the carrying device and is in retaining contact with the retaining device,
- the carrying device is moved into a position in which it slopes down in relation to an approximately planar underlying surface,
- an edge of the article is positioned on the underlying surface,
- the carrying device is moved out from beneath the article, the retaining contact between the article and the retaining device being maintained in the process, and
- the article is lowered by means of the retaining device until it rests entirely on the underlying surface.

## Revendications

1. Poignée de robot pour saisir, transporter et déposer des marchandises transportées, notamment des bagages tels que des valises et des sacs de voyage, avec :
- une base de poignée (410) avec un dispositif de couplage (412) à placer au niveau d'un bras de robot (10) ;
- un dispositif porteur (430) s'étendant dans une direction longitudinale de poignée (2) avec une surface portante servant à porter la marchandise transportée et s'étendant pour l'essentiel dans la direction longitudinale de poignée (2) et dans une direction transversale de poignée (3) ;
- un dispositif de transfert (450) disposé dans une direction verticale de poignée (1) au-dessus du dispositif porteur (430) et servant à l'application de force du marchandise transportée dans la direction longitudinale de poignée (2) ;
- le dispositif porteur (430) pouvant être déplacé par rapport à la base de poignée (410) et au dispositif de transfert (450) dans la direction longitudinale de poignée (2) ;
- le dispositif porteur (430) comportant au niveau de son extrémité proximale, orientée vers la base de poignée (410), deux sections d'extrémité (432) placées à une certaine distance l'une de l'autre dans la direction transversale de poignée (3), ces sections évidant un espace libre (460) prévu entre elles ; et
- les sections d'extrémité (432) du dispositif porteur (430) étant disposées dans la position d'extrémité, orientée vers la base de poignée, du dispositif porteur (430) respectivement dans la direction longitudinale de poignée (2), derrière le dispositif de couplage (412) ; **caractérisée en ce que** :
- les sections d'extrémité (432) du dispositif porteur (430) sont disposées dans la position d'extrémité, orientée vers la base de poignée, du dispositif porteur (430) dans la direction transversale de poignée (3) opposée, des deux côtés, à la hauteur du dispositif de couplage (412).

2. Poignée de robot selon la revendication 1, **caractérisée en ce que** le dispositif porteur peut être déplacé par rapport à la base de poignée dans la direction longitudinale de poignée, une courroie d'entraînement étant fixée au niveau des extrémités opposées du dispositif porteur et la courroie d'entraînement étant placée sous la forme d'un Ω autour de deux sections de guidage prévues fixement sur place par rapport à la base de poignée ainsi qu'autour d'une roue d'entraînement disposée fixement sur place de façon à pouvoir tourner autour d'un axe d'entraînement par rapport à la base de poignée.

3. Robot de manipulation, notamment pour saisir, transporter et déposer des marchandises transportées, notamment des bagages tels que des valises et des sacs de voyage, avec :
- une base de robot disposée fixement sur place ou pouvant être déplacée via un système de rail ;
- un bras de robot (10) mobile par rapport à la base de robot au niveau de l'extrémité de laquelle un dispositif de couplage (20) est prévu pour le couplage d'une poignée de robot ;
**caractérisé en ce que** une poignée de robot (400) selon l'une quelconque des revendications précédentes est placée au niveau du dispositif de couplage (20) du bras de robot (10).

4. Procédé pour saisir une marchandise transportée à partir d'un sol pour l'essentiel plan avec une poignée de robot selon l'une quelconque des revendications 1 à 2, **caractérisé en ce que** :
le dispositif de transfert comporte un dispositif de maintien et qu'à partir d'un état de départ dans lequel le dispositif porteur et le dispositif de maintien sont dans une position relative dans laquelle le dispositif porteur est disposé derrière le dispositif de maintien,
- le dispositif de maintien est ramené contre une surface latérale de la marchandise transportée tandis que le dispositif porteur est disposé dans une orientation, chutant par rapport à son extrémité distale, par rapport au sol,
- ledit dispositif de maintien étant amené en contact de maintien avec la surface latérale ;
- le dispositif de maintien, notamment la totalité de la poignée de robot avec le dispositif de maintien, est soulevé, de sorte que la surface latérale, se trouvant en contact avec le dispositif de maintien, de la marchandise transportée est soulevée en cas de bascule simultanée de la marchandise transportée ;
- le dispositif porteur est déplacé vers l'avant par rapport au dispositif de maintien et ainsi en-dessous de la marchandise transportée et
- la marchandise transportée est soulevée à l'aide du dispositif porteur et en l'occurrence détachée du sol.

5. Procédé de dépose d'une marchandise transportée provenant d'une poignée de robot selon l'une quelconque des revendications 1 à 2, **caractérisé en ce que** le dispositif de transfert comporte un dispositif de maintien et qu'à partir d'un état de départ dans lequel la marchandise transportée repose sur le dispositif porteur et est maintenue en contact de maintien avec le dispositif de maintien :
- le dispositif porteur étant amené dans une position chutant par rapport à un sol quelque peu plan ;
- une arête de la marchandise transportée est placée sur le sol ;
- le dispositif porteur est sorti, en cas de contact de maintien durable de la marchandise transportée avec le dispositif de maintien, sous la marchandise transportée ; et
- la marchandise transportée étant abaissée à l'aide du dispositif de maintien jusqu'à reposer entièrement sur le sol.
